# EUROPÄISCHE PATENTSCHRIFT

(11) **EP 3 189 256 B1**
(45) Veröffentlichungstag und Bekanntmachung des Hinweises auf die Patenterteilung: **14.11.2018**
(21) Anmeldenummer: 15723702.5
(22) Anmeldetag: 20.05.2015
(51) Int. Cl.: F16K 27/00, F16B 21/20, H01F 7/16, F16B 2/24, F16K 27/02, F16K 31/06, H01F 7/126

(54) **BEFESTIGUNGSCLIP UND DAMIT AUSGESTATTETES VENTIL**
ATTACHMENT CLIP AND VALVE EQUIPPED THEREWITH
CLIP DE FIXATION ET SOUPAPE ÉQUIPÉE DE CE DERNIER

(43) Veröffentlichungstag der Anmeldung: 12.07.2017
(73) Patentinhaber: Festo AG & Co. KG, 73734 Esslingen (DE)
(72) Erfinder: RUTHARDT, Michael, 73666 Baltmannsweiler (DE)
(74) Vertreter: Patentanwälte Magenbauer & Kollegen Partnerschaft mbB
(86) Internationale Anmeldenummer: PCT/EP2015/061067
(87) Internationale Veröffentlichungsnummer: WO 2016/184511

(56) Entgegenhaltungen:
- EP-A2- 1 284 380
- DE-C1- 3 500 256
- US-A- 2 342 690
- US-A- 2 899 700
- US-A- 3 295 079

## Beschreibung

Die Erfindung betrifft einen Befestigungsclip zur Befestigung einer auf ein Ankerrohr eines Ventils aufgesteckten Magnetspuleneinheit, mit einer von einem Zentrierloch durchsetzten Grundplatte, mit zwei an einander entgegengesetzten Umfaltrandbereichen der Grundplatte umgefalteten und über eine Oberseite der Grundplatte ragenden Klemmflügeln, die stirnseitig an ihren einander zugewandten freien Enden über eine Klemmkante verfügen, die gemeinsam eine in Achsrichtung einer Hochachse mit dem Zentrierloch fluchtende Klemmöffnung begrenzen, wobei die Klemmflügel unter Veränderung des Querschnitts der Klemmöffnung relativ zu der Grundplatte federelastisch biegbar sind und in einer auf das Ankerrohr aufgesteckten Gebrauchsstellung des Befestigungsclips mit ihren Klemmkanten unter Vorspannung klemmend am Außenumfang des das Zentrierloch und die Klemmöffnung durchsetzenden Ankerrohrs anliegen.

Die Erfindung betrifft ferner ein Ventil, das einen Sockelabschnitt aufweist, von dem ein Ankerrohr wegragt, in dem ein zur Betätigung eines Ventilglieds dienender Magnetanker verschiebbar angeordnet ist, und mit einer elektrisch betätigbaren Magnetspuleneinheit, die auf das Ankerrohr aufgesteckt ist und mittels eines auf dem Ankerrohr aufgebrachten Befestigungselements fixiert ist.

Aus der DE 28 25 220 A1 ist ein Befestigungsclip der vorstehend genannten Art bekannt, der eine gewölbte Grundscheibe umfasst, die ein rechteckiges Loch aufweist. An der Grundscheibe sind mindestens zwei Klemmflügel angeordnet, wobei der eine Klemmflügel an die Grundscheibe angefaltet ist und der andere Klemmflügel aus der Grundscheibe herausgebogen ist, sodass freie Enden der Klemmflügel einander entgegenragen. Die einander entgegenragenden Enden der Klemmflügel erstrecken sich derart über das rechteckige Loch der Grundscheibe, dass sie eine mit dem rechteckigen Loch fluchtende Klemmöffnung bilden, mit der der Befestigungsclip auf einen Bolzen aufschiebbar ist, sodass die Klemmflügel klemmend am Bolzenaußenumfang angreifen und der Befestigungsclip gegen axiales Verschieben gesichert ist. An dem zur Grundplatte angefalteten Klemmflügel sind zwei von der Grundplatte nach oben wegragende Zungen angeordnet, mit denen der Befestigungsclip unter Zuhilfenahme einer Zange im Rahmen einer Demontagebewegung von dem Bolzen abgezogen werden kann. Hierbei kann der Befestigungsclip durch das Angreifen der Zange und Ausführung der Demontage beschädigt werden.

Aus der DE 35 00 256 C1 ist eine Federklammer zur axialen Festlegung eines Bauteils auf einem Bolzen bekannt, die zwei Spreizzungen aufweist, die mittels bogenförmiger Stege zusammengehalten werden und mit ihren einander zugewandten Kanten an die Metallfläche des Bolzens angedrückt werden. Durch elastisches Zusammendrücken der Stege können die Spreizzungen voneinander entfernt werden, um sie von dem Bolzen zu lösen.

Aus der DE 7 245 827 U ist eine Sicherungsscheibe für Bolzen bekannt, die einen von einem Seitenrand einer Grundscheibe hochgebogenen und an einer Oberseite der Grundscheibe angefalteten ersten Klemmflügel umfasst, wobei die Grundscheibe eine Öffnung aufweist. Der erste Klemmflügel erstreckt sich derart über die Oberseite der Grundscheibe, dass ein freies Ende des ersten Klemmflügels sehnenartig über die Öffnung der Grundscheibe ragt. In einer Gebrauchsstellung ist die Sicherungsscheibe auf einen Bolzen oder dergleichen aufgesteckt, wobei der Bolzen durch die Öffnung der Grundscheibe hindurchragt und das sehnenartig über die Öffnung ragende freie Ende des ersten Klemmflügels am Bolzen angreift. In dem Bolzen ist ein tangentialer Einschnitt eingebracht, in den das freie Ende des ersten Klemmflügels eingreifen kann. Ein zweiter Klemmflügel der Sicherungsscheibe kann mit Hilfe einer Zange gegen den Außenumfang des Bolzens gebogen werden, sodass er mit dem Außenumfang des Bolzens radial verspannt wird. Dadurch wird erreicht, dass die Sicherungsscheibe gegen axiale Bewegung an dem Bolzen gesichert ist.

Aus der DE 25 53 250 C3 ist ein Ventil der eingangs genannten Art bekannt, das ein Gehäuse umfasst, in das eine Bohrung eingebracht ist, in der eine Mehrzahl von Ventilsitzen ausgebildet ist. Die Bohrung nimmt ein Verstellglied auf, das axial in der Bohrung verschiebbar ist und auf dem Verschlussstücke angebracht sind, um im Gehäuse ausgebildete Ventilsitze verschließen und öffnen zu können. Ferner verfügt das Mehrwegeventil über eine Vorsteuerventileinrichtung, die ein Gehäuse aufweist, von dem aus ein Ankerrohr wegragt. Über das Ankerrohr ist eine Magnetspuleneinheit gesteckt, sodass ein im Ankerrohr axial beweglicher Magnetanker durch ein, infolge der Betätigung der Magnetspuleneinheit erzeugtes Magnetfeld, axial verschieblich ist. Ein im Gehäuse der Vorsteuerventileinrichtung angeordneter Ventilsitz kann somit in Abhängigkeit der Betätigung der Magnetspuleneinheit entweder geöffnet oder verschlossen werden. Die Magnetspuleneinheit ist in ihrem auf das Ankerrohr aufgesteckten Zustand durch ein am Ankerrohr angreifendes, von einer Befestigungsmutter gebildetes Befestigungselement axial fixiert. Um das Befestigungsmittel am Außenumfang des Ankerrohrs anbringen zu können, ist ein Gewinde am Außenumfang des Ankerrohrs auszubilden, sodass die Herstellung des Ventils kostenintensiv ist. Auch gestalten sich die Montage und gegebenenfalls Demontage der Befestigungsmutter relativ zeitaufwändig.

Der Erfindung liegt die Aufgabe zugrunde, einen sich zur Befestigung einer Magnetspuleneinheit auf dem Ankerrohr eines Ventils eignenden Befestigungsclip zu schaffen, der in seiner Herstellung kostengünstig ist und eine einfache Handhabung ermöglicht. Ferner soll ein mit dem Befestigungsclip ausgestattetes Ventil bereitgestellt werden.

Diese Aufgabe wird bei einem Befestigungsclip der eingangs genannten Art dadurch gelöst, dass an jedem Klemmflügel abseits dessen Klemmkante mindestens eine Betätigungslasche angeordnet ist, die über die der Grundplatte abgewandte Oberseite des Klemmflügels vorsteht, wobei die Betätigungslaschen jeweils eine Betätigungsfläche aufweisen, die mit einer Betätigungskraft beaufschlagbar ist, um die Klemmflügel im Rahmen einer Öffnungsbewegung zur Vergrößerung des Querschnitts der Klemmöffnung elastisch auseinanderzuspreizen und dadurch die Klemmung bezüglich des Ankerrohrs zu lösen.

Ferner wird die Aufgabe bei einem Ventil der eingangs genannten Art dadurch gelöst, dass es mit dem im vorstehenden Sinne ausgebildeten Befestigungsclip als Befestigungselement ausgestattet ist.

Durch die Erfindung wird ein Befestigungsclip zur axialen Fixierung einer auf ein Ankerrohr eines Ventils aufsteckbaren Magnetspuleneinheit bereitgestellt. Der Befestigungsclip umfasst zwei an die Grundplatte angefaltete Klemmflügel, an denen jeweils mindestens eine Betätigungslasche angeordnet ist, die eine Betätigungsfläche aufweist. Ferner sind freie Enden der beiden über die Oberseite der Grundplatte ragenden Klemmflügel zueinander gerichtet, sodass sie sich über ein in die Grundplatte eingebrachtes Zentrierloch erstrecken. Dabei bilden an den freien Enden der Klemmflügel ausgebildete Klemmkanten eine mit dem Zentrierloch fluchtende Klemmöffnung. Die an den Betätigungslaschen angeordneten Betätigungsflächen sind jeweils mit einer Betätigungskraft beaufschlagbar, wodurch die zwei sich über die Oberseite der Grundplatte erstreckenden Klemmflügel federelastisch auseinanderbiegbar sind. Hierdurch kann die Klemmöffnung des Befestigungsclips derart vergrößert werden, dass der Befestigungsclip in eine auf das Ankerrohr aufgesteckte Gebrauchsstellung bringbar ist. In dieser Gebrauchsstellung liegen die nicht mehr von der Betätigungskraft beaufschlagten Klemmkanten der Klemmflügel an dem Außenumfang des Ankerrohrs klemmend an, sodass eine kraftschlüssige Fixierung des Befestigungsclips am Ankerrohr in dessen axialer Richtung erreicht wird. Durch neuerliches Beaufschlagen der Betätigungslaschen an ihren Betätigungsflächen können die Klemmflügel jederzeit wieder von dem Ankerrohr abgehoben werden, um den Befestigungsclip bei Bedarf wieder zu entfernen. Durch diese Ausgestaltung kann der Befestigungsclip in einfacher und kostengünstiger Weise auf ein Ankerrohr oder dergleichen beliebig oft montiert werden.

Das erfindungsgemäße Ventil weist einen Sockelabschnitt auf, von dem ein einen zur Betätigung eines Ventilglieds dienenden Magnetanker aufnehmendes Ankerrohr wegragt. Auf dieses Ankerrohr ist eine elektrisch betätigbare Magnetspuleneinheit aufgesteckt, deren axiale Fixierung durch einen Befestigungsclip nach oben beschriebener Bauart erfolgt. Hierdurch kann erreicht werden, dass die auf das Ankerrohr des Sockelabschnitts aufgesteckte Magnetspuleneinheit in einfacher Weise gegen axiales Verschieben bezüglich des Ankerrohres gesichert ist und jederzeit auch wieder mit geringem Aufwand entfernt werden kann.

Vorteilhafte Weiterbildungen der Erfindung gehen aus den Unteransprüchen hervor.

In einer vorteilhaften Weiterbildung der Erfindung sind die Betätigungslaschen jeweils von einem Seitenrand eines Klemmflügels hochgebogen, wobei die Betätigungslaschen in Achsrichtung der Hochachse von der jeweiligen Oberseite des Klemmflügels wegragen. Die Betätigungslaschen können sich über die gesamte Länge eines Seitenrandes eines Klemmflügels erstrecken. Es ist allerdings vorteilhaft, wenn sich die Betätigungslaschen nicht über die gesamte Länge des Seitenrandes erstrecken, sondern nur einen Teil der gesamten Länge eines Seitenrandes einnehmen, sodass der Seitenrand nur teilweise von einer an ihm hochgebogenen Betätigungslasche bedeckt ist. Jedenfalls ist es dadurch sehr einfach möglich, die Betätigungslaschen einstückig mit dem Klemmflügel herzustellen, sodass keine zusätzlichen Befestigungselemente benötigt werden.

Zweckmäßigerweise weisen die von einem Seitenrand hochgebogenen Betätigungslaschen jeweils mindestens einen plattenförmigen Betätigungsabschnitt auf. Dieser definiert eine Betätigungsfläche, die besonders günstig durch eine Betätigungskraft beaufschlagbar ist, sodass der die Betätigungslasche aufweisende Klemmflügel infolge der Beaufschlagung mit der Betätigungskraft von der Grundplatte federelastisch weggebogen werden kann. Vorteilhafterweise sind die plattenförmig ausgestalteten Betätigungslaschen mit ihren Plattenebenen bezüglich einer die beiden Umfaltrandbereiche der Grundplatte durchsetzenden und zur Hochachse rechtwinkelig ausgerichteten Längsachse rechtwinkelig ausgerichtet. Diese Längsachse wird im Folgenden auch als "Clip-Längsachse" bezeichnet. Hierdurch wird erreicht, dass die zur federelastischen Betätigung der Klemmflügel erforderliche Betätigungskraft über eine große Fläche verteilt sehr einfach in den jeweiligen Klemmflügel eingeleitet werden kann.

In einer bevorzugten Ausführungsform der Erfindung ist der plattenförmige Betätigungsabschnitt von einem umgebogenen Endabschnitt der jeweiligen Betätigungslasche gebildet. Dabei können die Betätigungsabschnitte der verschiedenen Betätigungslaschen mit unterschiedlicher Länge ausgebildet sein. Durch das Umbiegen der Betätigungslaschen ist in einfacher Weise ein plattenförmiger Betätigungsabschnitt an der Betätigungslasche geschaffen, der mit auf die Betätigungsfläche wirkenden Betätigungskräften beaufschlagbar ist.

Eine zweckmäßige Ausprägung der Erfindung umfasst einen ersten Laschenabschnitt, der von der Oberseite eines Klemmflügels hochragt. An diesen ersten Laschenabschnitt schließt sich in Achsrichtung der sich durch die Umfaltrandbereiche der Grundplatte erstreckenden Clip-Längsachse ein zweiter Laschenabschnitt an, der sich entlang dieser Längsachse erstreckt. Der zweite Laschenabschnitt kann an seinem freien Ende einen seitlich abgewinkelten Endabschnitt umfassen. Vorzugsweise ist durch den abgewinkelten Endabschnitt die mit Betätigungskräften beaufschlagbare Betätigungsfläche definiert. Durch diese Gestaltung wird erreicht, dass die auf die Betätigungsfläche wirkenden Betätigungskräfte beispielsweise händisch, durch Drücken mit den Fingern auf die Betätigungsflächen, aufgebracht werden können.

Es ist auch vorteilhaft, wenn der erste Laschenabschnitt von einem Seitenrand des Klemmflügels hochgebogen ist. Ferner erstreckt sich der erste Laschenabschnitt bevorzugt entlang einer Ebene, die von der Hochachse und der Clip-Längsachse aufgespannt ist. Vorzugsweise erstreckt sich der erste Laschenabschnitt im Wesentlichen parallel zu dieser Ebene, sodass die an den Klemmflügeln ausgebildeten ersten Laschenabschnitte bezüglich dieser Ebene und bezüglich ihrer eigenen Laschenabschnittsoberflächen im Wesentlichen parallel verlaufen. Infolgedessen sind die von den Seitenrändern der Klemmflügel wegragenden beziehungsweise hochgebogenen ersten Laschenabschnitte zueinander parallel und ragen von der Oberseite der Klemmflügel nach oben weg.

In einer weiteren Ausführungsform der Erfindung ist vorgesehen, dass die Betätigungsflächen der Betätigungslaschen auf einander entgegengesetzten Seiten einer Bezugsebene angeordnet sind. Die Bezugsebene ist vorzugsweise zu der Clip-Längsachse rechtwinkelig ausgerichtet und fällt insbesondere gleichzeitig mit einer zur Clip-Längsachse orthogonal verlaufenden Querachse zusammen. Dabei sind die Betätigungsflächen der Betätigungslaschen von der Bezugsebene abgewandt. Durch diese Anordnung wird erreicht, dass die Betätigungsfläche einer Betätigungslasche eines Klemmflügels in die gleiche Richtung weist wie die am gleichen Klemmflügel ausgebildete Klemmkante, sodass die Klemmkante und die Betätigungsfläche an einem Klemmflügel in die gleiche Richtung weisen. Durch diese Ausgestaltung kann erreicht werden, dass bei der Beaufschlagung der Betätigungsflächen mit der Betätigungskraft, die beispielsweise durch das Drücken mit zwei Fingern auf die Betätigungsfläche aufbringbar ist, die Klemmflügel auseinandergespreizt werden können, sodass der Befestigungsclip wieder vom Ankerrohr gelöst werden kann.

Als besonders vorteilhaft ist es angesehen, wenn die Bezugsebene, von der die Betätigungsflächen wegweisen und bezüglich der die Betätigungsflächen auf einander entgegengesetzten Seiten angeordnet sind, mit der Hochachse zusammenfällt.

Es ist vorteilhaft, wenn die Grundplatte des Befestigungsclips und die über die Grundplatte ragenden Klemmflügel gewölbt sind. Vorzugsweise ist dabei die konvexe Seite der Grundplatte zu den Klemmflügeln gewandt und die konvexen Seiten der Klemmflügel sind von der Grundplatte abgewandt, sodass der Befestigungsclip gesamthaft eine bogenförmige Gestalt aufweist. Auf diese Weise kann erreicht werden, dass die Öffnungsbewegung, bei der die Klemmflügel voneinander weggespreizt werden, mit geringeren Betätigungskräften erfolgen kann.

Ferner ist der Befestigungsclip in seiner Gebrauchsstellung vorzugsweise mit der konkav gewölbten Unterseite der Grundplatte voraus an eine Auflagefläche der Magnetspuleneinheit angedrückt. Durch die gewölbte Gestaltung kann der Befestigungsclip mit zwei Auflagebereichen, die vorzugsweise die Umfaltrandbereiche sind, an die Magnetspuleneinheit angedrückt sein.

Zweckmäßigerweise sind die Wölbung der Klemmflügel und die Wölbung der Grundplatte identisch, sodass sie den gleichen Krümmungsradius aufweisen. Hierdurch wird insbesondere die Herstellung des Befestigungsclips erleichtert.

In einer weiteren Ausführungsform der Erfindung ist die Klemmkante eines jeden Klemmflügels aus zwei zueinander V-förmig angeordneten Klemmkantenabschnitten gebildet. Die zueinander V-förmig angeordneten Klemmkantenabschnitte erstrecken sich vorzugsweise von einem Mittenbereich des Klemmflügels in Richtung des freien Endes des Klemmflügels, wobei sie in Richtung des freien Endes des Klemmflügels divergieren. Auf diese Weise ist der Befestigungsclip in besonders einfacher Weise an das Ankerrohr anklemmbar, da das Ankerrohr in der Gebrauchsstellung des Befestigungsclips durch je zwei Klemmkantenabschnitte pro Klemmflügel geklemmt ist. Die Klemmkantenabschnitte liegen insbesondere nur punktuell am Außenumfang des Ankerrohrs an, sodass die Klemmkräfte an diesen Punkten besonders groß sind und folglich eine hohe Flächenpressung erreichbar ist, sodass der Befestigungsclip besonders einfach am Außenumfang des Ankerrohrs festklemmbar ist. Man erreicht insbesondere eine Vierpunktauflage der Klemmflügel am Außenumfang des Ankerrohrs.

In einer weiteren vorteilhaften Ausbildung der Erfindung ist der Befestigungsclip als ein einteiliges Stanzbiegeteil ausgeführt. Bevorzugt besteht dieses aus einem federelastische Eigenschaften aufweisenden Metall. Hierdurch wird erreicht, dass der Befestigungsclip in besonders kostengünstiger Weise herstellbar ist. Ferner bietet ein metallischer Werkstoff den Vorteil, dass die Klemmflügel des Befestigungsclips ohne Beschädigungsgefahr praktisch beliebig oft durch die Beaufschlagung mit einer Betätigungskraft federelastisch biegbar sind. Infolgedessen kann der Befestigungsclip praktisch beliebig oft montiert und demontiert werden. Allerdings kann auch ein nichtmetallischer Werkstoff mit federelastischen Eigenschaften eingesetzt werden, beispielsweise ein Kunststoff.

Zweckmäßigerweise liegt der Befestigungsclip in seiner Gebrauchsstellung mit seinen Umfaltrandbereichen an einer Auflagefläche der auf das Ankerrohr aufgesteckten Magnetspuleneinheit an. Die auf das Ankerrohr aufgesteckte Magnetspuleneinheit ist bevorzugt Teil eines Ventils. Dadurch, dass der Befestigungsclip mit seinen Umfaltrandbereichen an der Auflagefläche der Magnetspuleneinheit anliegt und gleichzeitig an das Ankerrohr geklemmt ist, wird eine axiale Bewegung der Magnetspuleneinheit auf dem Ankerrohr in einfacher Weise verhindert.

Zweckmäßigerweise verfügt jeder Klemmflügel über mindestens zwei Betätigungslaschen, die jeweils an einem der beiden Seitenränder des Klemmflügels angeordnet sind, wobei es vorteilhaft ist, wenn die Betätigungslaschen von den Seitenrändern in Achsrichtung der Hochachse hochgebogen sind. Ferner ist an jeder Betätigungslasche jeweils ein plattenförmiger Betätigungsabschnitt ausgebildet, der die Betätigungsflächen definiert. Dabei liegen alle Betätigungsflächen der Betätigungsabschnitte eines Klemmflügels bevorzugt in einer gemeinsamen Ebene. Durch diese Ausgestaltung wird erreicht, dass das Beaufschlagen der Betätigungsflächen mit der Betätigungskraft besonders einfach ist, beispielsweise kann die Betätigungskraft durch das Aufdrücken mit den Fingern auf die Betätigungsflächen erreicht werden. Dabei kann die Betätigungskraft auf jede Betätigungsfläche gleichstark wirken, sodass die Öffnungsbewegung des Befestigungsclips gleichmäßig erfolgt.

In einer bevorzugten Ausführungsform der Erfindung sind die plattenförmigen Betätigungsabschnitte von Endabschnitten der Betätigungslaschen gebildet. Die Endabschnitte sind bezüglich der Betätigungslaschen zur Seite hin und vorzugsweise rechtwinkelig umgebogen. In einer besonderen Ausführungsform ragen die umgebogenen Endabschnitte des einen Klemmflügels zueinander, während die umgebogenen Endabschnitte des anderen Klemmflügels voneinander wegragen. Zweckmäßigerweise sind die Betätigungslaschen, die die zueinander ragenden Endabschnitte aufweisen, zwischen denjenigen Betätigungslaschen angeordnet, die die voneinander wegragenden Endabschnitte aufweisen. Somit können die Betätigungslaschen der Klemmflügel in platzsparender Weise angeordnet werden und die Öffnungsbewegung des Befestigungsclips wird nicht von den Betätigungslaschen behindert.

In einer weiteren Ausführungsform der Erfindung ist vorgesehen, dass sich zwischen den Umfaltrandbereichen an einander entgegengesetzten Seiten der Grundplatte zwei Seitenränder der Grundplatte erstrecken, die eine konvexe Wölbung aufweisen, die vom Zentrierloch der Grundplatte weg nach außen orientiert ist. Die Seitenränder ragen dabei zweckmäßigerweise über die Klemmflügel hinaus. Diese Ausgestaltung ermöglicht eine einfache Handhabung des Befestigungsclips bei der Montage, da die nach außen hin gewölbten Seitenränder als Halteränder zum vorübergehenden Festhalten des Befestigungsclips genutzt werden können.

Besonders bevorzugt ist eine Ausführungsform der Erfindung, bei der von der Oberseite eines ersten Klemmflügels ein erstes Paar von Betätigungslaschen in Achsrichtung der Clip-Längsachse über den zweiten Klemmflügel ragt. Die Betätigungslaschen sind dabei quer zur Clip-Längsachse beabstandet angeordnet, sodass zwischen ihnen ein Freiraum ausgebildet ist. Ferner ist am zweiten Klemmflügel ein zweites Paar von Betätigungslaschen angeordnet, das von dessen Oberseite wegragt und mit seitlichem Versatz an dem ersten Paar von Betätigungslaschen ebenfalls in Achsrichtung der Clip-Längsachse vorbeiragt. Dadurch ist das eine Paar von Betätigungslaschen von dem anderen Paar von Betätigungslaschen seitlich flankiert. Durch diese Ausgestaltung wird erreicht, dass das Paar von Betätigungslaschen des einen Klemmflügels zu dem Paar von Betätigungslaschen des anderen Klemmflügels in platzsparender Weise angeordnet sind. Der Befestigungsclip kann folglich besonders kompakt ausgeführt werden, sodass der für seine Benutzung benötigte Bauraum minimiert ist.

Als besonders vorteilhaft wird angesehen, wenn der eine der beiden Klemmflügel breiter als der andere Klemmflügel ist. Dabei sind die jeweils von einem Seitenrand des Klemmflügels hochgebogenen und zueinander in Richtung der Clip-Längsachse beabstandeten Betätigungslaschen des schmäleren Klemmflügels zu den Betätigungslaschen des breiteren Klemmflügels quer versetzt angeordnet. Diese Ausgestaltung hat den Vorteil, dass die Betätigungslaschen des breiteren Klemmflügels an den Betätigungslaschen des schmäleren Klemmflügels seitlich vorbeiragen. Somit ist eine platzsparende Anordnung der Betätigungslaschen möglich, sodass der Befestigungsclip kompakt ausgebildet ist.

Eine zweckmäßige Ausprägung eines mit dem Befestigungsclip ausgestatteten Ventils sieht vor, dass die Magnetspuleneinheit und der Sockelabschnitt durch den Befestigungsclip lösbar verbindbare Bestandteile einer Vorsteuerventileinrichtung sind, wobei die Vorsteuerventileinrichtung eine Hauptventileinrichtung des Ventils betätigen kann. Die Vorsteuerventileinrichtung und die Hauptventileinrichtung sind zu einer Baugruppe zusammengefasst, die gesamthaft das Ventil darstellt. Es ist aber auch denkbar, dass die Vorsteuerventileinrichtung ein eigenständiges Ventil ist, welches nicht zur Vorsteuerung einer Hauptventileinrichtung verwendet wird. In diesem Fall weist das Ventil ausschließlich die Elemente der Vorsteuerventileinrichtung auf.

In einer besonders vorteilhaften Ausführung des erfindungsgemäßen Ventils ist das Ankerrohr des Sockelabschnitts im Angriffsbereich der Klemmkanten der Klemmflügel des Befestigungsclips nutenlos ausgeführt. Ein in der Gebrauchsstellung auf das Ankerrohr aufgesteckter Befestigungsclip ist mit seinen an den Klemmflügeln angeordneten Klemmkanten kraftschlüssig an das nutenlos ausgeführte Ankerrohr angeklemmt, wobei die nötige Anklemmkraft durch die elastische Verspannung der Klemmflügel am Ankerrohr erzeugt wird. Dadurch wird erreicht, dass das Ankerrohr keine zusätzlichen Nuten, Gewinde oder dergleichen im Bereich seiner axialen Erstreckung aufweisen muss, um den Befestigungsclip am Außenumfang des Ankerrohrs fixieren zu können. Die axiale Fixierung der Magnetspuleneinheit gegenüber dem Sockelabschnitt kann somit kostengünstig und besonders einfach erfolgen.

Als besonders vorteilhaft wird eine Ausführungsform angesehen, bei der der Befestigungsclip aufgrund seiner federelastischen Eigenschaften zur mehrfachen Montage und Demontage auf dem Ankerrohr zwecks Fixierung der Magnetspuleneinheit genutzt werden kann. Auf diese Weise sind die einzelnen Ventilkomponenten einfach und kostengünstig mehrfach montierbar, wobei insbesondere auch die Montagezeit im Vergleich zu bekannten Befestigungsmitteln geringer ist.

Nachfolgend wird die Erfindung anhand der beiliegenden Zeichnung erläutert. In dieser zeigen:
- Figur 1: eine bevorzugte Ausführungsform eines Ventils mit Befestigungsclip in einer perspektivischen Ansicht, wobei der Befestigungsclip in seine Gebrauchsstellung auf das Ankerrohr des Sockelabschnitts aufgebracht ist,
- Figur 2: das in Figur 1 abgebildete Ventil in einer perspektivischen Explosionsdarstellung, ohne Hauptventileinrichtung,

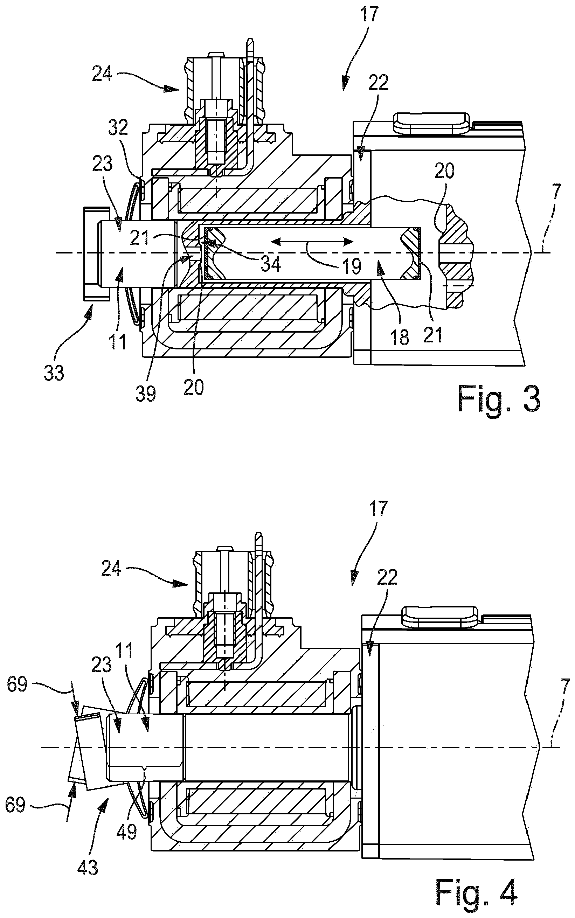

- Figur 3: das Ventil aus Figur 1 in einer Seitenansicht, wobei Teile des Ventils im Teilschnitt gemäß Schnittlinie III-III dargestellt sind und der Befestigungsclip in seiner Gebrauchsstellung gezeigt ist,
- Figur 4: das Ventil aus Figur 1 in einer Seitenansicht, wobei die Magnetspuleneinheit und der Befestigungsclip gemäß Schnittlinie IV-IV geschnitten dargestellt sind und der Befestigungsclip in seiner Offenstellung gezeigt ist,
- Figur 5: den Befestigungsclip in einer Einzeldarstellung in einer perspektivischen Ansicht, wobei seine Klemmflügel die unbetätigte Stellung einnehmen,

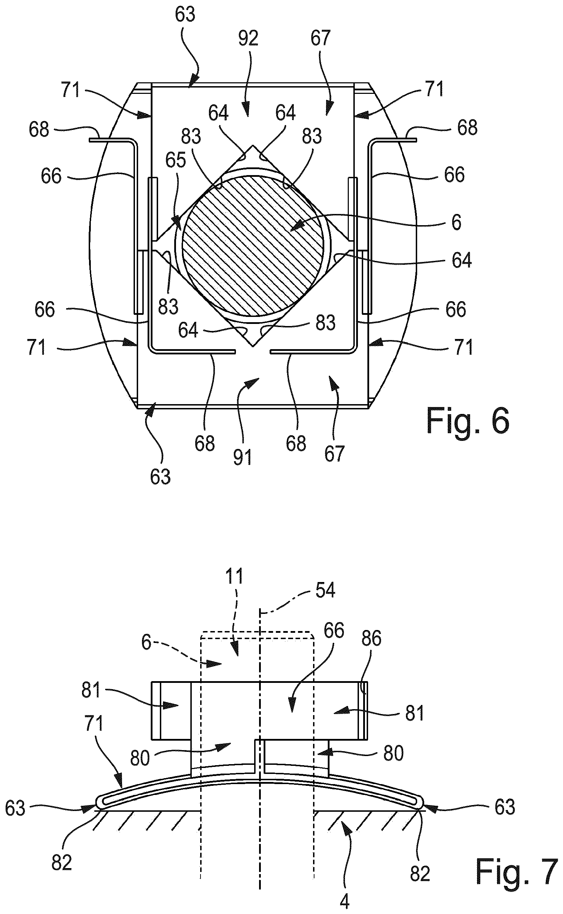

- Figur 6: den Befestigungsclip aus Figur 5 in seiner auf ein im Querschnitt abgebildetes Ankerrohr aufgesteckten Gebrauchsstellung in einer Draufsicht gemäß Pfeil VI, wobei der Befestigungsclip vom Ankerrohr des Sockelabschnitts durchsetzt ist, sodass die Klemmflügel am Außenumfang des Ankerrohrs geklemmt sind,
- Figur 7: den Befestigungsclip aus Figur 5 in einer Seitenansicht gemäß Pfeil VII, wobei sich der Befestigungsclip in einer an die nur schematisch angedeutete Magnetspuleneinheit angedrückten Gebrauchsstellung befindet und das gestrichelt dargestellte Ankerrohr den Befestigungsclip durchsetzt,

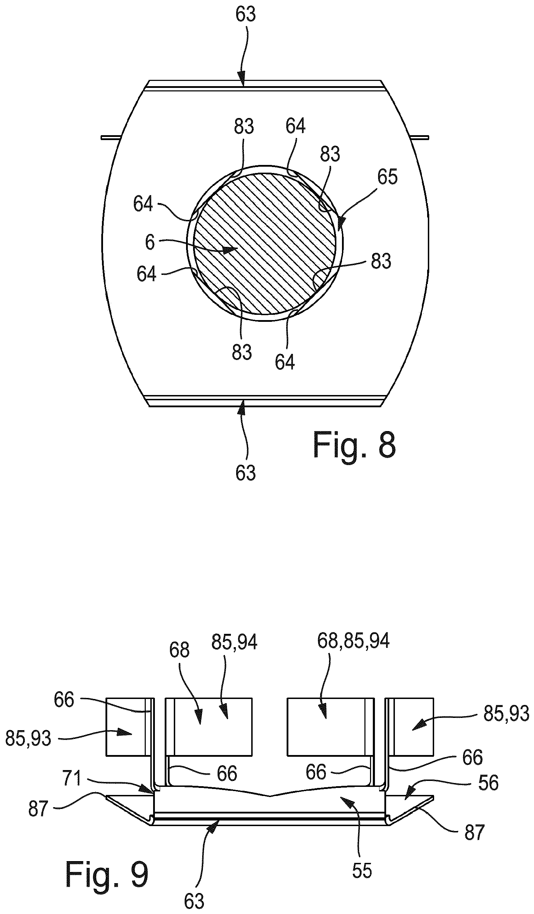

- Figur 8: den Befestigungsclip aus Figur 5 in einer Ansicht von unten gemäß Pfeil VIII, wobei die Klemmkanten der Klemmflügel am Außenumfang des Ankerrohrs klemmend anliegen,
- Figur 9: den Befestigungsclip aus Figur 5 in einer Frontansicht gemäß Pfeil IX,

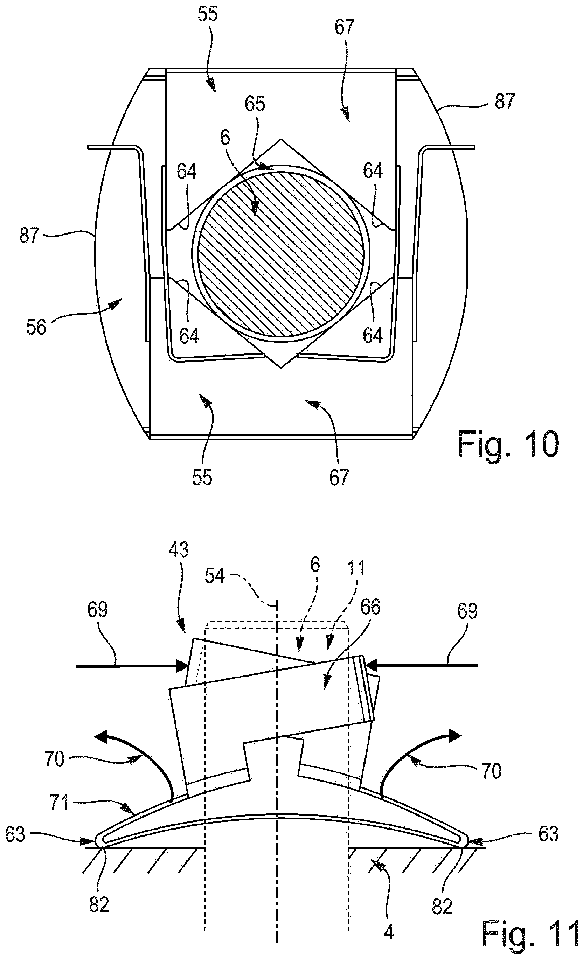

- Figur 10: den Befestigungsclip aus Figur 5 in einer Draufsicht analog Figur 6, wobei er in einer Offenstellung gezeigt ist, in der die Klemmflügel vom Außenumfang des den Befestigungsclip durchsetzenden Ankerrohrs beabstandet sind,
- Figur 11: den Befestigungsclip aus Figur 5 in einer Seitenansicht analog Figur 7, wobei er in einer Offenstellung gezeigt ist, in der er an eine Oberfläche angedrückt ist und die Klemmkanten vom Außenumfang des Ankerrohrs beabstandet sind, und

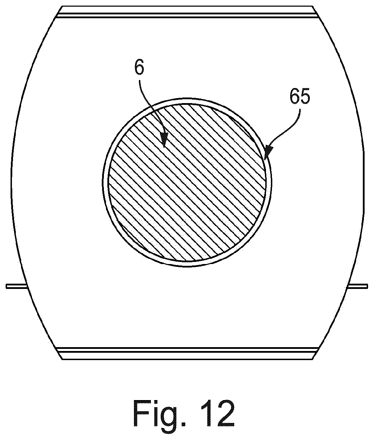

- Figur 12: den Befestigungsclip aus Figur 5 in einer Ansicht von unten analog Figur 8, wobei er in einer Offenstellung gezeigt ist, in der die Klemmkanten der Klemmflügel vom Außenumfang des Ankerrohrs abgehoben sind.

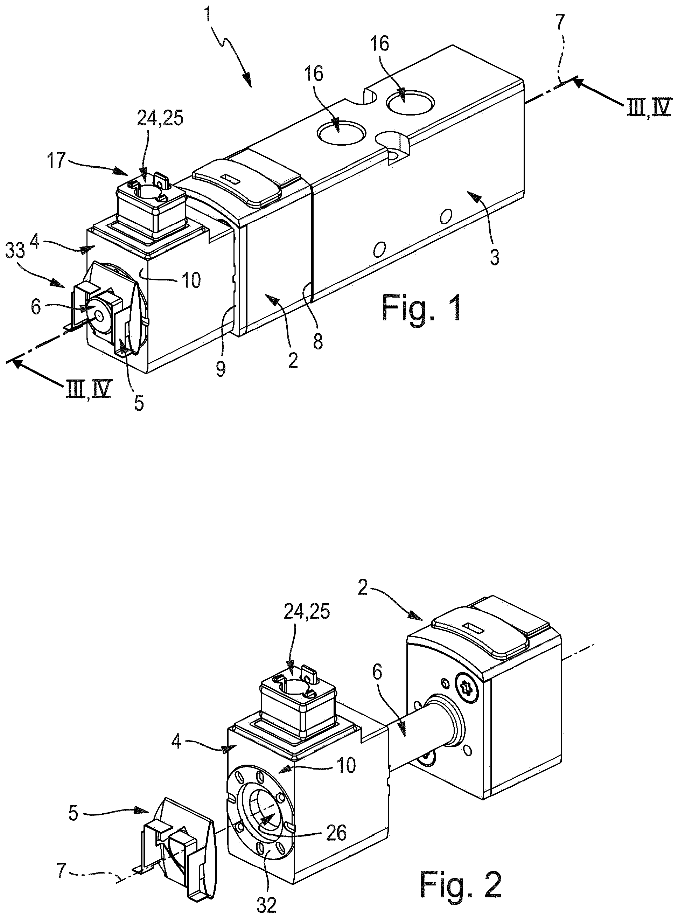

In der Figur 1 ist gesamthaft ein mit Bezugsziffer 1 bezeichnetes Ventil gezeigt, das einen Sockelabschnitt 2 und eine Hauptventileinrichtung 3, eine Magnetspuleneinheit 4 und einen Befestigungsclip 5 aufweist. Der Sockelabschnitt 2 ist an einer Stirnseite 8 der Hauptventileinrichtung 3 vorzugsweise lösbar angebracht. Ausgehend von einer der Stirnseite 8 der Hauptventileinrichtung 3 entgegengesetzten Sockelstirnseite 9 des Sockelabschnitts 2 erstreckt sich ein Ankerrohr 6 axial entlang einer Bezugsachse 7. Dabei ist die Magnetspuleneinheit 4 auf das Ankerrohr 6 axial aufgeschoben, sodass sie an der Sockelstirnseite 9 des Sockelabschnitts 2 anliegt.

Das Ankerrohr 6 hat einen dem Sockelabschnitt 2 entgegengesetzten freien Endabschnitt 11, mit dem es über die aufgeschobene Magnetspuleneinheit 4 hinausragt. Auf diesen freien Endabschnitt 11 ist der Befestigungsclip 5 aufgesteckt, sodass er an die dem freien Endabschnitt 11 des Ankerrohrs 6 zugewandte, als Auflagefläche 10 bezeichnete äußere Stirnfläche der Magnetspuleneinheit 4 angedrückt ist. Der Befestigungsclip 5 ist vom Ankerrohr 6 durchsetzt und an dessen Außenumfang angeklemmt. Diese Stellung des Befestigungsclips 5 sei als Gebrauchsstellung 33 bezeichnet.

Dadurch, dass der Befestigungsclip 5 am Ankerrohr 6 angeklemmt und an die Auflagefläche 10 der Magnetspuleneinheit 10 angedrückt ist, kann die Magnetspuleneinheit 4 ihrerseits in axialer Richtung bezüglich der Bezugsachse 7 an die Sockelstirnseite 9 des Sockelabschnitts 2 angepresst sein. Jedenfalls ist die Magnetspuleneinheit 4 zwischen dem Sockelabschnitt 2 und dem Befestigungsclip 5 bevorzugt axial unbewegbar fixiert. Aufgrund der hervorgerufenen Reibung und/oder durch zusätzliche Fixierungsmittel ist die Magnetspuleneinheit 4 zweckmäßigerweise auch gegen eine ungewollte rotatorische Bewegung gesichert.

Die Hauptventileinrichtung 3 ist vorzugsweise ein zur Steuerung von Fluidströmen geeignetes Wegeventil, beispielsweise ein 5/3-Wegeventil. Zweckmäßigerweise sind nicht dargestellte fluidführende Fluidleitungen im Betrieb des Ventils 1 an in die Hauptventileinrichtung 3 eingebrachte Fluidanschlüsse 16 angeschlossen, durch die hindurch ein von dem Ventil 1 zu steuerndes Fluid, insbesondere Druckluft, zugeführt und abgeführt werden kann.

Der Sockelabschnitt 2 ist wie das Ankerrohr 6, die Magnetspuleneinheit 4 und der Befestigungsclip 5 ein Bestandteil einer Vorsteuerventileinrichtung 17, die zur Ansteuerung der Hauptventileinrichtung 3 dient. Zu dieser Vorsteuerventileinrichtung 17 gehört außerdem ein innerhalb des Ankerrohrs 6 gleitverschieblich gelagerter Magnetanker 18, der im Rahmen einer linearen Arbeitsbewegung 19 zwischen zwei Arbeitsstellungen verschiebbar ist, in denen er zwei seinen beiden Stirnflächen zugewandte Ventilsitze 20 abwechselnd freigeben oder fluiddicht verschließen kann. Vorzugsweise sind an den Stirnseiten des Magnetankers 18 gummielastische Schließelemente 21 angeordnet, die das fluiddichte Verschließen der Ventilsitze 20 begünstigen.

Das von der Sockelstirnseite 9 des Sockelabschnitts 2 wegragende Ankerrohr 6 weist einen sich an die Sockelstirnseite 9 anschließenden hohlzylindrischen ersten Ankerrohrabschnitt 22 und einen sich an den ersten Ankerrohrabschnitt 22 anschließenden, den freien Endabschnitt 11 bildenden zylindrischen zweiten Ankerrohrabschnitt 23 auf. Der zylindrische zweite Ankerrohrabschnitt 23 ist mit dem ersten Ankerrohrabschnitt 22 fest verbunden und zum Beispiel einstückig ausgebildet. Der zweite Ankerrohrabschnitt 23 definiert einen feststehenden Ankerabschnitt und weist eine ihn axial durchsetzende Entlüftungsausnehmung 39 auf, die einerseits mit der das Ventil 1 umgebenden Atmosphäre in Verbindung steht und andererseits mit einer Ankerkammer 34 in Verbindung steht, in welcher der Magnetanker 18 gleitverschieblich gelagert ist.

Die elektrisch betätigbare Magnetspuleneinheit 4 umfasst Mittel, mit denen im Falle einer elektrischen Betätigung ein das Ankerrohr 6 und den darin gleitverschieblich gelagerten Magnetanker 18 durchdringendes Magnetfeld erzeugt werden kann. Dadurch wird der Magnetanker 18 an den feststehenden Ankerabschnitt herangezogen. Für die entgegengesetzte Bewegung sorgt eine nicht abgebildete Federeinrichtung. Hierdurch kann die lineare Arbeitsbewegung 19 des vorzugsweise ferromagnetischen Magnetankers 18 hervorgerufen werden, um das Öffnen und Verschließen der Ventilsitze 20 zu ermöglichen. Zur elektrischen Betätigung ist ein elektrisches Kontaktierungsmittel 24, vorzugsweise in Form eines Steckerelements 25, vorgesehen, an dem eine elektrische Betätigungsspannung anlegbar ist.

Ferner weist die Magnetspuleneinheit 4 eine sie axial durchsetzende Führungsausnehmung 26 auf, die sich von der der Auflagefläche 10 entgegengesetzten Oberfläche der Magnetspuleneinheit 4 bis hin zur Auflagefläche 10 erstreckt. Vorzugsweise ist die Führungsausnehmung 26 von zylindrischer Form und hat einen Durchmesser, der geringfügig größer ist als der Außenumfang des Ankerrohrs 6, sodass die Magnetspuleneinheit 4 auf das Ankerrohr 6 geschoben werden kann. An der Auflagefläche 10 kann eine die Führungsausnehmung 26 kragenartig umrahmende Befestigungsstirnseite 32 ausgebildet sein, an die der Befestigungsclip 5 andrückbar ist.

In der Figur 2 ist ein Teil des Ventils 1 in einer perspektivischen Explosionsdarstellung gezeigt, wobei die Magnetspuleneinheit 4 vom Befestigungsclip 5 und vom Sockelabschnitt 2 in Achsrichtung der Bezugsachse 7 beabstandet angeordnet ist. Dies ist ein Zustand vor dem Zusammenbau. Die Hauptventileinrichtung 3 ist nicht dargestellt. Die illustrierte Anordnung kann einer Montagereihenfolge entsprechen, bei der zunächst die Magnetspuleneinheit 4 auf das Ankerrohr 6 aufgeschoben wird, bis die Magnetspuleneinheit 4 an der Sockelstirnseite 9 des Sockelabschnitts 2 anliegt. Nachfolgend kann der Befestigungsclip 5 in Richtung der Bezugsachse 7 auf den freien Endabschnitt 11 des Ankerrohrs 6 aufgeschoben werden, sodass er in seiner Gebrauchsstellung 33 klemmend am Außenumfang des Ankerrohrs 6 anliegt, wodurch die Magnetspuleneinheit 4 an den Sockelabschnitt 2 angedrückt ist und eine axiale Bewegung der Magnetspuleneinheit 4 in Richtung der Bezugsachse 7 relativ zum Ankerrohr 6 unterdrückt ist. Zweckmäßigerweise ragt das Ankerrohr 6 in der Gebrauchsstellung 33 des Befestigungsclips 5 über den Befestigungsclip 5 hinaus.

Ist die Magnetspuleneinheit 4 auf das Ankerrohr 6 des Sockelabschnitts 2 aufgesteckt, dann ragt das Ankerrohr 6 wie schon erwähnt mit seinem zweiten Ankerrohrabschnitt 23 über die Befestigungsstirnseite 32 des Sockelabschnitts 2 hinaus, sodass auf den freien Endabschnitt 11 der Befestigungsclip 5 aufsteckbar beziehungsweise in der Gebrauchsstellung 33 aufgesteckt ist.

Das Ankerrohr 6 weist zweckmäßigerweise keine Nuten oder ähnliche Einkerbungen im Bereich eines am Außenumfang des zweiten Ankerrohrabschnitts 23 definierten Angriffsbereichs 49 auf, wobei der Befestigungsclip 5 im Bereich dieses Angriffsbereichs 49 in seiner Gebrauchsstellung 33 angeklemmt ist. Aufgrund des Fehlens von Nuten oder ähnlichen Einkerbungen im Ankerrohr 6 kann dessen Herstellung besonders günstig erfolgen.

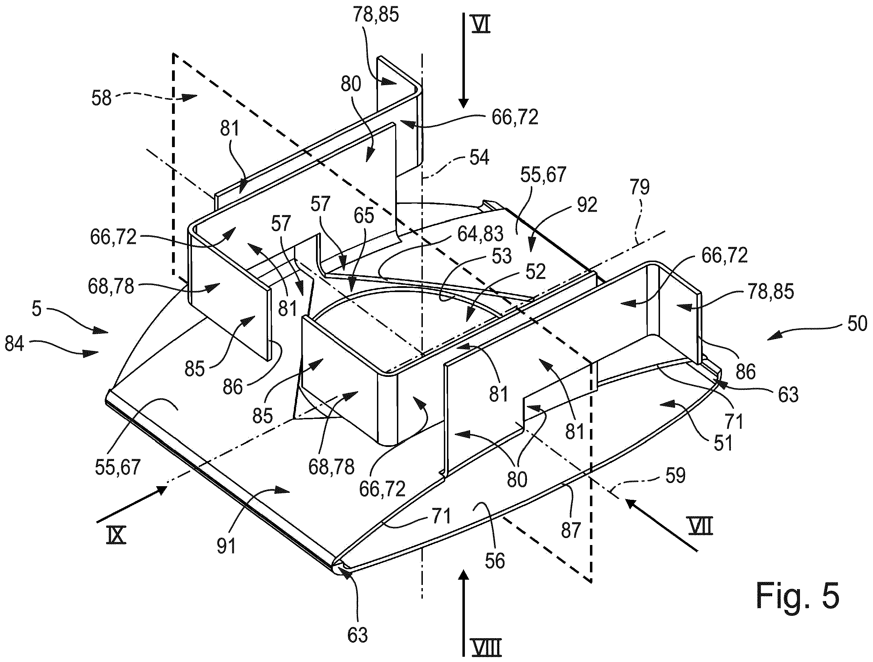

In der Figur 5 ist eine perspektivische Ansicht des Befestigungsclips 5 gezeigt, in der er eine unbetätigte Grundstellung 50 einnimmt. Der Befestigungsclip 5 ist zur axialen Befestigung der auf das Ankerrohr 6 des Ventils 1 aufgesteckten Magnetspuleneinheit 4 vorgesehen und weist eine Grundplatte 51 auf, die von einem Zentrierloch 52 durchsetzt ist. Das Zentrierloch 52 ist bevorzugt von kreisrunder Gestalt und weist einen Zentrierloch-Innenrand 53 auf. Koaxial zu diesem Zentrierloch-Innenrand 53 erstreckt sich eine imaginäre Hochachse 54 des Befestigungsclips 5, die bezüglich der Grundplatte 51 rechtwinkelig ausgerichtet ist.

An der Grundplatte 51 sind mindestens zwei Klemmflügel 55 einstückig derart angebracht, dass sie ausgehend von zwei einander entgegengesetzten Randbereichen der Grundplatte 51 über eine Oberseite 56 der Grundplatte 51 ragen. Die Klemmflügel 55 sind bezüglich der Grundplatte 51 umgefaltet, weshalb die zuvor erwähnten Randbereiche als Umfaltrandbereiche 63 bezeichnet werden. Die Klemmflügel 55 ragen mit ihrem den Umfaltrandbereichen 63 entgegengesetzten freien Klemmflügelenden 57 einander entgegen. Die Umfaltrandbereiche 63 verlaufen zueinander zumindest im Wesentlichen parallel. Die beiden über die Oberseite 56 der Grundplatte 51 ragenden Klemmflügel 55 weisen an ihrem zueinander gerichteten freien Klemmflügelende 57 jeweils eine Klemmkante 64 auf. Diese Klemmkanten 64 sind zueinander quer zu der Hochachse 54 beabstandet.

Die Klemmflügelenden 57 der Klemmflügel 55 ragen derart über die Oberseite 56 der Grundplatte 51, dass die an den Klemmflügelenden 57 stirnseitig angeordneten Klemmkanten 64 über das Zentrierloch 52 ragen. Dabei begrenzen sie gemeinsam eine mit dem Zentrierloch 52 in Achsrichtung der Hochachse 54 fluchtende Klemmöffnung 65. Die zwei an der Grundplatte 51 umgefalteten Klemmflügel 55 sind relativ zu der Oberseite 56 der Grundplatte 51 in deren Höhenrichtung federelastisch biegbar, wobei sie durch federelastisches Aufbiegen von der Oberseite 56 entfernbar oder durch federelastisches Zudrücken an die Oberseite 56 annäherbar sind. Bei dieser weg von oder hin zu der Oberseite 56 der Grundplatte 51 gerichteten Schwenkbewegung der Klemmflügel 55 ändert sich der Querschnitt der Klemmöffnung 65. Ausgehend von einer ursprünglichen, unbelasteten Grundstellung 50 der Klemmflügel 55, in der der Querschnitt der Klemmöffnung 65 kleiner ist als der Querschnitt des freien Endabschnittes 11 des Ankerrohrs 6, wird der Querschnitt der Klemmöffnung 65 größer, wenn die Klemmflügel 55 von der Grundplatte 51 weggeschwenkt und dadurch auseinandergespreizt werden.

Infolge der federelastischen Biegbarkeit der Klemmflügel 55 ist der Befestigungsclip 5 auf das Ankerrohr 6 aufsteckbar, sodass er die Gebrauchsstellung 33 einnimmt, in der die Klemmflügel 55 durch das die Klemmöffnung 65 durchsetzende Ankerrohr 6 geringfügig aufgebogen sind. Die Klemmöffnung 65 ist somit vergrößert und die Klemmflügel 55 stehen unter elastischer Verspannung. Folglich greifen die an den Klemmflügeln 55 angeordneten Klemmkanten 64 klemmend am Außenumfang des Ankerrohrs 6 an, sodass der Befestigungsclip 5 am Ankerrohr 6 infolge der federelastischen Rückstellbewegung der Klemmflügel 55 axial unbeweglich festgeklemmt ist. Das Ankerrohr 6 durchsetzt dabei den Befestigungsclip 5 entlang der Hochachse 7 sowohl durch das Zentrierloch 52 als auch durch die Klemmöffnung 65 hindurch. Dabei weist das Zentrierloch 52 einen geringfügig größeren Durchmesser als das Ankerrohr 6 auf, sodass zum einen das Ankerrohr 6 die Grundplatte 51 durchdringen kann und zum anderen der Befestigungsclip 5 durch den Zentrierloch-Innenrand 53 bezüglich des Ankerrohrs 6 zentriert ist.

An jedem Klemmflügel 55 ist mindestens eine abseits der Klemmkante 64 und bevorzugt von der Klemmkante 64 beabstandete Betätigungslasche 66 angeordnet, die über die der Grundplatte 51 abgewandte Oberseite 67 der Klemmflügel 55 hinausragt, wobei sie sich im Wesentlichen entlang der Hochachse 54 erstreckt. Die Betätigungslaschen 66 weisen jeweils eine Betätigungsfläche 68 auf, an der sie mit einer Betätigungskraft 69 beaufschlagbar sind, um die Klemmflügel 55 im Rahmen einer Öffnungsbewegung 70, unter federelastischer Auseinanderspreizung der Klemmflügel 55, in eine Offenstellung 43 zu verschwenken, in der der Querschnitt der Klemmöffnung 65 vergrößert ist, sodass die Klemmung bezüglich des Ankerrohrs 6 gelöst ist und eine Demontage des Befestigungsclips 5 erfolgen kann. Der Befestigungsclip 5 wird zu seiner Demontage unter Festhalten seiner Offenstellung 43 entlang der Hochachse 54 von dem Ankerrohr 6 abgezogen.

Die Klemmflügel 55 umfassen jeweils zwei Seitenränder 71, die rechtwinkelig zu den Umfaltrandbereichen 63 orientiert sind. Von jedem Seitenrand 71 ragt vorzugsweise eine Betätigungslasche 66 in Achsrichtung der Hochachse 54 nach oben weg und steht über die Oberseite 67 des Klemmflügels 55 vor, wobei die Betätigungslasche 66 zweckmäßigerweise nur an einem Teilbereich des Seitenrands 71 angeformt und von diesem hochgebogen ist. Die Betätigungslaschen 66 sind zweckmäßigerweise senkrecht zur Oberseite 67 der Klemmflügel 55 ausgerichtet. Es ist aber auch denkbar, dass die Betätigungslaschen 66 bezüglich der Hochachse 54 eine andere Ausrichtung einnehmen.

Die Betätigungslaschen 66 weisen jeweils einen plattenförmigen Betätigungsabschnitt 78 auf, der von der Betätigungslasche 66 bevorzugt zur Seite hin weggebogen ist und die mit der Betätigungskraft 69 beaufschlagbare Betätigungsfläche 68 definiert. Der Betätigungsabschnitt 78 erstreckt sich zumindest im Wesentlichen rechtwinkelig zu einer Längsachse 79, die zwischen den beiden Umfaltrandbereichen 63 verläuft und zur Hochachse 54 rechtwinkelig ausgerichtet ist. Es ist auch denkbar, dass an jedem Klemmflügel 55 nur eine Betätigungslasche 66 angeordnet ist.

Die Betätigungslaschen 66 umfassen einen an der Oberseite 67 des zugeordneten Klemmflügels 55 hochragenden ersten Laschenabschnitt 80. Dieser vorzugsweise von einem der Seitenränder 71 eines Klemmflügels 55 hochgebogene und plattenförmig ausgestaltet erste Laschenabschnitt 80 weist mit Höhenabstand zum Klemmflügel 55 einen sich an ihn anschließenden zweiten Laschenabschnitt 81 auf, der sich in Richtung der Clip-Längsachse 79 vom ersten Laschenabschnitt 80 wegerstreckt, wobei sich an den zweiten Laschenabschnitt 81 der seitwärts abgewinkelte Betätigungsabschnitt 78 anschließt. Der seitwärts abgewinkelte Betätigungsabschnitt 78 definiert die mit der Betätigungskraft 69 beaufschlagbare Betätigungsfläche 68.

Vorzugsweise ist der erste Laschenabschnitt 80 einstückig mit dem Klemmflügel 55 ausgebildet und von einem Seitenrand 71 des Klemmflügels 55 derart hochgebogen, dass er sich zumindest im Wesentlichen parallel zu einer Ebene erstreckt, die zum einen durch die Clip-Längsachse 79 und zum anderen durch die Hochachse 54 aufgespannt ist. Somit sind alle ersten Laschenabschnitte 80 eines jeden Klemmflügels 55 zumindest im Wesentlichen parallel zu dieser Ebene angeordnet. Die zweiten Laschenabschnitte 81 erstrecken sich bevorzugt in der gleichen Ebene wie der jeweils zugeordnete erste Laschenabschnitt 80. Die Betätigungsabschnitte 78 erstrecken sich in hierzu rechtwinkeligen Ebenen.

Die Betätigungsflächen 68 der Betätigungslaschen 66 liegen bevorzugt auf einander entgegengesetzten Seiten einer zu der Clip-Längsachse 79 rechtwinkelig angeordneten Bezugsebene 58, wobei sie von der Bezugsebene 58 abgewandt sind und stets voneinander wegweisen, sodass die Betätigungskräfte 69, die auf die Betätigungsflächen 68 einwirken können, von einander entgegengesetzten Seiten her zur Bezugsebene 58 gewandt sind. Die Betätigungsfläche 68 der Betätigungslasche 66 eines Klemmflügels 55 und die Klemmkante 64 des gleichen Klemmflügels 55 weisen jeweils in die gleiche Richtung. Bevorzugt fällt die Bezugsebene 58 mit der Hochachse 54 zusammen und erstreckt sich rechtwinkelig zu der Clip-Längsachse 79. Auf diese Weise ist die Bezugsebene 58 und ferner die Ausrichtung der an den Betätigungslaschen 66 angeordneten Betätigungsflächen 68 vorteilhaft definiert, da der Befestigungsclip 5 im Rahmen seiner Montage oder Demontage bequem mit der Hand oder einem Werkzeug von außen durch Zusammendrücken der Betätigungsabschnitte vom Ankerrohr 6 gelöst werden kann, wobei die Klemmflügel 55 auseinandergespreizt werden.

Die Grundplatte 51 und die über die Oberseite 56 der Grundplatte 51 ragenden Klemmflügel 55 sind zweckmäßigerweise gewölbt, wobei die Grundplatte 51 eine konvexe Seite aufweist, die den Klemmflügeln 55 zugewandt ist. Die Klemmflügel 55 sind derart gewölbt, dass sie jeweils eine konvexe Seite aufweisen, die von der Oberseite 56 der Grundplatte 51 abgewandt ist. Bevorzugt haben die Grundplatte 51 und die Klemmflügel 55 einen zumindest im Wesentlichen identischen Krümmungsradius. Es ist aber auch eine Ausgestaltung möglich, bei der die Wölbungen der Grundplatte 51 und der Klemmflügel 55 unterschiedliche Krümmungsradien aufweisen.

Durch die Wölbung wird erreicht, dass die Öffnungsbewegung 70 des Befestigungsclips 5 unterstützt wird. Ferner ist durch die Wölbung der Grundplatte 51 eine schmale Auflagefläche 82 im Bereich jedes Umfaltrandbereiches 63 der Grundplatte 51 geschaffen. Mit diesen beiden zueinander beabstandeten Auflageflächen 82 stützt sich der Befestigungsclip 5 an der Auflagefläche 10 der Magnetspuleneinheit 4 ab, wenn er sich in seiner auf das Ankerrohr 6 aufgesteckten Gebrauchsstellung 33 befindet.

Die an jedem Klemmflügel 55 angeordnete Klemmkante 64 ist bevorzugt aus zwei zueinander V-förmig angeordneten Klemmkantenabschnitten 83 gebildet. Die Klemmkantenabschnitte 83 erstrecken sich vorzugsweise von der Mitte eines Klemmflügels 55 in divergierender Weise in Richtung der Seitenränder 71 des Klemmflügels 55. Auf diese Weise ist eine Klemmkante 64 ausgebildet, die in der Gebrauchsstellung 33 des Befestigungsclips 5 mit selbstzentrierender Wirkung an dem Außenumfang des Ankerrohrs 6 angeklemmt ist. Durch die V-förmige Ausgestaltung kann erreicht werden, dass die Klemmkantenabschnitte 83 nur punktuell am Außenumfang des Ankerrohrs 6 anliegen, sodass der Befestigungsclip 5 mit hoher Flächenpressung am Ankerrohr 6 geklemmt werden kann.

Der Befestigungsclip 5 besteht aus einem Material mit federelastischen Eigenschaften. Er ist insbesondere als einteiliges, aus Metall bestehendes Stanzbiegeteil 84 realisiert.

Hierdurch wird erreicht, dass der Befestigungsclip 5 besonders kostengünstig hergestellt werden kann. Es ist allerdings auch möglich, dass der Befestigungsclip 5 aus einem Kunststoff hergestellt ist, beispielsweise in einem Spritzgussverfahren.

Bei dem vorteilhaften Ausführungsbeispiel verfügt jeder Klemmflügel 55 über zwei Betätigungslaschen 66, die jeweils von einem Seitenrand 71 des jeweiligen Klemmflügels 55 hochragen. Die Seitenränder 71 sind einander entgegengesetzt in Achsrichtung einer Clip-Querachse 59 ausgerichtet, die rechtwinkelig zu der Clip-Längsachse 79 und der Hochachse 54 verläuft. Zweckmäßigerweise liegen die Betätigungsflächen 68 der am jeweils gleichen Klemmflügel 55 angeordneten Betätigungslaschen 66 in einer gemeinsamen Ebene.

Die an den Betätigungslaschen 66 der Klemmflügel 55 ausgebildeten plattenförmigen Betätigungsabschnitte 78 sind in einer besonderen Ausführungsform von zur Seite hin, das heißt in Achsrichtung der Clip-Querachse 59, umgebogenen Endabschnitten 85 der Betätigungslaschen 66 gebildet. Vorteilhaft ist es, wenn diese zur Seite hin umgebogenen Endabschnitte 85 der beiden Betätigungslaschen 66 des einen Klemmflügels 55 zueinander ragen und die ebenfalls zur Seite hin umgebogenen Endabschnitte 85 der beiden Betätigungslaschen 66 des anderen Klemmflügels 55 voneinander wegragen. Die Endabschnittsstirnflächen 86 der Betätigungslaschen 66 des einen Klemmflügels 55 weisen daher zueinander und die Endabschnittsstirnflächen 86 der Betätigungslaschen 66 des anderen Klemmflügels 55 weisen voneinander weg.

Nachfolgend werden die beiden Klemmflügel 55 des Befestigungsclips 5 zur besseren Unterscheidung auch als erster Klemmflügel 91 und als zweiter Klemmflügel 92 bezeichnet.

Bevorzugt ragt von der Oberseite 67 des ersten Klemmflügels 55, 91 ein erstes Paar 93 von Betätigungslaschen 66 nach oben weg, das sich außerdem in Achsrichtung der Clip-Längsachse 79 über den zweiten Klemmflügel 55, 92 erstreckt. Von der Oberseite 67 des zweiten Klemmflügels 55, 92 ragt ein zweites Paar 94 von Betätigungslaschen 66 ebenfalls nach oben weg und erstreckt sich entlang der Clip-Längsachse 79 in entgegengesetzte Richtung wie das erste Paar 93 von Betätigungslaschen 66, wobei das erste Paar 93 von Betätigungslaschen 66 an dem zweiten Paar 94 von Betätigungslaschen 66 mit seitlichem Versatz außen vorbeiragt. Das zweite Paar 94 von Betätigungslaschen 66 erstreckt sich also zwischen den beiden Betätigungslaschen 66 des ersten Paars 93 von Betätigungslaschen. Dabei sind die Betätigungslaschen 66 des ersten Paars 93 von Betätigungslaschen 66 und die Betätigungslaschen 66 des zweiten Paars 94 von Betätigungslaschen 66 jeweils quer zur Clip-Längsachse 79, das heißt in Achsrichtung der Clip-Querachse 59, voneinander beabstandet.

Das eine Paar 93 von Betätigungslaschen 66 ragt an dem anderen Paar 94 von Betätigungslaschen 66 seitlich vorbei, wobei das innen liegende zweite Paar 94 von Betätigungslaschen 66 von dem außen liegenden ersten Paar 93 von Betätigungslaschen 66 flankiert ist. Hierdurch wird erreicht, dass der Befestigungsclip 5 in besonders platzsparender Weise herstellbar ist. Ferner wird durch diese Anordnung erreicht, dass die zur Beaufschlagung mit der Betätigungskraft 69 vorgesehenen Betätigungsflächen 68 der Betätigungslaschen 66 in besonders einfacher Weise bei der Montage betätigt werden können.

Vorteilhafterweise ist der erste Klemmflügel 55, 91 in Achsrichtung der Clip-Querachse 59 breiter als der zweite Klemmflügel 55, 92 ausgebildet. Dadurch sind die an den Klemmflügeln 55 angeordneten Seitenränder 71 zueinander quer zur Clip-Längsachse 79 versetzt, sodass die von diesen Seitenrändern 71 hochgebogenen Betätigungslaschen 66 ebenfalls zueinander versetzt angeordnet sind. Dadurch lässt sich das Ineinandereingreifen der beiden Paare 93, 94 von Betätigungslaschen 66 besonders einfach realisieren.

Die durch eine entsprechende Betätigung aktiv einstellbare Offenstellung 43 des Befestigungsclips 5 dient vorzugsweise sowohl der Montage als auch der Demontage des Befestigungsclips 5. Bei der Montage erfolgt das Aufstecken und bei der Demontage das Abziehen des Befestigungsclips 5 bezüglich des Ankerrohrs 6. Bei der Montage des Befestigungsclips 5 kann allerdings bevorzugt auf das aktive Verformen in die Offenstellung 43 auch verzichtet werden, da die Klemmflügel 55 beim Aufstecken des Befestigungsclips 5 auf das Ankerrohr 6 durch den Kontakt mit dem Ankerrohr 6 von selbst auseinandergespreizt werden.

Der Befestigungsclip 5 weist an seiner Grundplatte 51 an in Achsrichtung der Clip-Querachse 59 einander entgegengesetzten Seiten zwei sich zwischen den Umfaltrandbereichen 63 erstreckende Grundplattenseitenränder 87 auf, die bevorzugt jeweils konvex nach außen gewölbt sind. In einer vorteilhaften Ausführungsform ragt die Grundplatte 51 mit ihren konvex nach außen gewölbten Grundplattenseitenrändern 87 über die Klemmflügel 55 seitlich hinaus. Durch diese Ausgestaltung ist der Befestigungsclip 5 bei seiner Montage einfach zu handhaben, beispielsweise durch das Greifen der Grundplattenseitenränder 87.

## Patentansprüche

1. Befestigungsclip zur Befestigung einer auf ein Ankerrohr (6) eines Ventils aufgesteckten Magnetspuleneinheit (4), mit einer von einem Zentrierloch (52) durchsetzten Grundplatte (51), mit zwei an einander entgegengesetzten Umfaltrandbereichen (63) der Grundplatte (51) umgefalteten und über eine Oberseite (56) der Grundplatte (51) ragenden Klemmflügeln (91,92), die stirnseitig an ihren einander zugewandten freien Enden über eine Klemmkante (64) verfügen, die gemeinsam eine in Achsrichtung einer Hochachse (54) mit dem Zentrierloch (52) fluchtende Klemmöffnung (65) begrenzen, wobei die Klemmflügel (91,92) unter Veränderung des Querschnitts der Klemmöffnung (65) relativ zu der Grundplatte (51) federelastisch biegbar sind und in einer auf das Ankerrohr (6) aufgesteckten Gebrauchsstellung (33) des Befestigungsclips (5) mit ihren Klemmkanten (64) unter Vorspannung klemmend am Außenumfang des das Zentrierloch (52) und die Klemmöffnung (65) durchsetzenden Ankerrohrs (6) anliegen, **dadurch gekennzeichnet, dass** an jedem Klemmflügel (91,92) abseits dessen Klemmkante (64) mindestens eine Betätigungslasche (66) angeordnet ist, die über die der Grundplatte (51) abgewandte Oberseite (67) des Klemmflügels (91,92) vorsteht, wobei die Betätigungslaschen (66) jeweils eine Betätigungsfläche (68) aufweisen, die mit einer Betätigungskraft (69) beaufschlagbar ist, um die Klemmflügel (91,92) im Rahmen einer Öffnungsbewegung (70) zur Vergrößerung des Querschnitts der Klemmöffnung (65) elastisch auseinanderzuspreizen und dadurch die Klemmung bezüglich des Ankerrohrs (6) zu lösen.

2. Befestigungsclip nach Anspruch 1, **dadurch gekennzeichnet, dass** die Betätigungslaschen (66) jeweils von einem Seitenrand (71) des Klemmflügels (55) hochgebogen sind und in Achsrichtung der Hochachse (54) von der Oberseite (67) des Klemmflügels (55) nach oben ragen.

3. Befestigungsclip nach Anspruch 1 oder 2, **dadurch gekennzeichnet, dass** die Betätigungslaschen (66) jeweils einen für die Beaufschlagung mit der Betätigungskraft (69) ausgebildeten und eine die Betätigungsflächen (68) definierenden plattenförmigen Betätigungsabschnitt (78) aufweisen, dessen Plattenebene bezüglich einer die Umfaltrandbereiche (63) der Grundplatte (51) durchsetzenden und zur Hochachse (54) rechtwinkelig ausgerichteten Längsachse (79) zumindest im Wesentlichen rechtwinkelig ausgerichtet ist, wobei zweckmäßigerweise der plattenförmige Betätigungsabschnitt (78) von einem umgebogenen Endabschnitt (85) der zugeordneten Betätigungslasche (66) gebildet ist.

4. Befestigungsclip nach einem der Ansprüche 1 bis 3, **dadurch gekennzeichnet, dass** die Betätigungslaschen (66) jeweils einen von der Oberseite (67) des Klemmflügels (55) hochragenden ersten Laschenabschnitt (80) aufweisen, von dem in Achsrichtung einer die Umfaltrandbereiche (63) der Grundplatte (51) durchsetzenden Längsachse (79) ein zweiter Laschenabschnitt (81) wegragt, an den sich ein seitwärts abgewinkelter Endabschnitt (85) anschließt, der einen die Betätigungsfläche (68) definierenden plattenförmigen Betätigungsabschnitt (78) bildet, wobei zweckmäßigerweise der erste Laschenabschnitt (80) von einem Seitenrand (71) des Klemmflügels (55) hochgebogen ist und zumindest im Wesentlichen parallel zu einer Ebene verläuft, die durch eine die beiden Umfaltrandbereiche (63) durchsetzende Längsachse (79) und die Hochachse (54) aufgespannt ist.

5. Befestigungsclip nach einem der Ansprüche 1 bis 4, **dadurch gekennzeichnet, dass** die Betätigungsflächen (68) der Betätigungslaschen (66) auf einander entgegengesetzten Seiten einer rechtwinkelig zu einer die beiden Umfaltrandbereiche (63) durchsetzenden Längsachse (79) verlaufenden Bezugsebene (58) angeordnet sind, wobei sie von der Bezugsebene (58) abgewandt sind und wobei jede Betätigungsfläche (68) in die gleiche Richtung weist wie die Klemmkante (64) desjenigen Klemmflügels (55), an dem die diese Betätigungsfläche (68) aufweisende Betätigungslasche (66) angeordnet ist, wobei zweckmäßigerweise die Bezugsebene (58) mit der Hochachse (54) zusammenfällt.

6. Befestigungsclip nach einem der Ansprüche 1 bis 5, **dadurch gekennzeichnet, dass** die Grundplatte (51) und die Klemmflügel (55) gewölbt sind, wobei die konvexe Seite der Grundplatte (51) den Klemmflügeln (55) zugewandt ist und die konvexen Seiten der Klemmflügel (55) von der Grundplatte (51) abgewandt sind, wobei zweckmäßigerweise die Wölbungen der Grundplatte (51) und der Klemmflügel (55) den gleichen Krümmungsradius aufweisen.

7. Befestigungsclip nach einem der Ansprüche 1 bis 6, **dadurch gekennzeichnet, dass** die Klemmkanten (64) jeweils aus zwei zueinander V-förmig angeordneten, in Richtung zum freien Ende des Klemmflügels (55) divergierenden Klemmkantenabschnitten (83) bestehen, derart, dass das Ankerrohr (6) in der Gebrauchsstellung (33) des Befestigungsclips (5) durch je zwei Klemmkantenabschnitte (83) pro Klemmflügel (55) geklemmt ist, und/oder dass der Befestigungsclip (5) als einteiliges, aus Metall bestehendes Stanzbiegeteil (84) ausgeführt ist, und/oder dass der Befestigungsclip (5) in seiner Gebrauchsstellung (33) mit den beiden Umfaltrandbereichen (63) der Grundplatte (51) an einer Auflagefläche (82) der auf das Ankerrohr (6) aufgesteckten Magnetspuleneinheit (4) anliegen kann oder anliegt.

8. Befestigungsclip nach einem der Ansprüche 1 bis 7, **dadurch gekennzeichnet, dass** jeder Klemmflügel (55) über zwei Betätigungslaschen (66) verfügt, die jeweils an einem von zwei einander entgegengesetzten Seitenrändern (71) des Klemmflügels (55) angeordnet sind und die jeweils einen eine der Betätigungsflächen (68) definierenden plattenförmigen Betätigungsabschnitt (78) aufweisen, wobei die plattenförmigen Betätigungsabschnitte (78) der am gleichen Klemmflügel (55) angeordneten Betätigungslaschen (66) zweckmäßigerweise in einer gemeinsamen Ebene liegen.

9. Befestigungsclip nach Anspruch 8, **dadurch gekennzeichnet, dass** die plattenförmigen Betätigungsabschnitte (78) von seitwärts umgebogenen Endabschnitten (85) der Betätigungslaschen (66) gebildet sind, wobei die seitwärts umgebogenen Endabschnitte (85) des einen Klemmflügels (55,92) zueinander ragen und die seitwärts umgebogenen Endabschnitte (85) des anderen Klemmflügels (55,91) voneinander wegragen, wobei zweckmäßigerweise die beiden die zueinander ragenden Endabschnitte (85) aufweisenden Betätigungslaschen (66) zwischen den beiden die voneinander wegragenden Endabschnitte (85) aufweisenden Betätigungslaschen (66) angeordnet sind.

10. Befestigungsclip nach einem der Ansprüche 1 bis 9, **dadurch gekennzeichnet, dass** die sich zwischen den Umfaltrandbereichen (63) erstreckenden Seitenränder (71) der Grundplatte (51) jeweils konvex nach außen gewölbt sind und zweckmäßigerweise seitlich über die Klemmflügel (55) hinausragen.

11. Befestigungsclip nach einem der Ansprüche 1 bis 10, **dadurch gekennzeichnet, dass** er eine die beiden Umfaltrandbereiche (63) durchsetzende Längsachse (79) aufweist, wobei von der Oberseite (67) des einen, ersten Klemmflügels (91) ein erstes Paar (93) quer zu der Längsachse (79) zueinander beabstandeter Betätigungslaschen (66) in Achsrichtung der Längsachse (79) über den anderen, zweiten Klemmflügel (92) ragt und wobei von der Oberseite (67) des zweiten Klemmflügels (92) ein zweites Paar (94) ebenfalls quer zu der Längsachse (79) beabstandeter Betätigungslaschen (66) in entgegengesetzter Richtung wie das erste Paar (93) von Betätigungslaschen (66) mit seitlichem Versatz an dem ersten Paar (93) von Betätigungslaschen (66) vorbei ragt, derart, dass das eine Paar (94) von Betätigungslaschen (66) an seiner Außenseite von dem anderen Paar (93) von Betätigungslaschen (66) flankiert ist.

12. Befestigungsclip nach einem der Ansprüche 1 bis 11, **dadurch gekennzeichnet, dass** der eine der beiden Klemmflügel (91) breiter als der andere Klemmflügel (92) ist, wobei die Betätigungslaschen (66) jeweils von einem Seitenrand (71) des zugeordneten Klemmflügels (55,91,92) hochgebogen sind und wobei die Betätigungslaschen (66) des einen Klemmflügels (91) zu den Betätigungslaschen (66) des anderen Klemmflügels (92) quer zu einer die beiden Umfaltrandbereiche (63) durchsetzenden Längsachse (79) versetzt angeordnet sind.

13. Ventil, mit einem Sockelabschnitt (2), von dem ein Ankerrohr (6) wegragt, in dem ein zur Betätigung eines Ventilglieds dienender Magnetanker (18) verschiebbar angeordnet ist, und mit einer elektrisch betätigbaren Magnetspuleneinheit (4), die auf das Ankerrohr (6) aufgesteckt ist und mittels eines auf dem Ankerrohr (6) aufgebrachten Befestigungselements fixiert ist, **dadurch gekennzeichnet, dass** das Befestigungselement ein auf das Ankerrohr (6) aufgesteckter Befestigungsclip (5) nach einem der Ansprüche 1 bis 12 ist.

14. Ventil, nach Anspruch 13, **dadurch gekennzeichnet, dass** die Magnetspuleneinheit (4) und der Sockelabschnitt (2) Bestandteile einer eine Hauptventileinrichtung (3) betätigenden Vorsteuerventileinrichtung (17) sind, wobei die Vorsteuerventileinrichtung (17) und die Hauptventileinrichtung (3) zu einer das Ventil (1) bildenden Baugruppe zusammengefasst sind.

15. Ventil nach einem der Ansprüche 13 oder 14, **dadurch gekennzeichnet, dass** das Ankerrohr (6) im Angriffsbereich (49) der Klemmkanten (64) des in der Gebrauchsstellung (33) angeordneten Befestigungsclips (5) nutenlos ausgeführt ist.

## Claims

1. Fastening clip for fastening a solenoid coil unit (4) fitted to an armature tube (6) of a valve, with a base plate (51) through which a centring hole (52) passes, with two clamping wings (91, 92) folded over in two opposite fold-over edge regions (63) of the base plate (51) and projecting beyond a top side (56) of the base plate (51), which clamping wings (91, 92) have at the end face at their mutually facing free ends a clamping edge (64) each, which together bound a clamping opening (65) in alignment with the centring hole (52) in the axial direction of a vertical axis (54), wherein the clamping wings (91, 92) are bendable in a spring-elastic way relative to the base plate (51) while changing the cross-section of the clamping opening (65) and in a position of use (33) of the fastening clip (5) fitted to the armature tube (6) bear with preload in a clamping manner against the outer circumference of the armature tube (6) passing through the centring hole (52) and the clamping opening (65), **characterised in that** at least one actuating tab (66) projecting above the top side (67) - remote from the base plate (51) - of the clamping wing (91, 92) is located on each of the clamping wings (91, 92) away from its clamping edge (64), wherein each of the actuating tabs (66) has an actuating face (68), to which an actuating force (69) can be applied in order to spread the clamping wings (91, 92) in the course of an opening movement (70) elastically to increase the cross-section of the clamping opening (65), thereby releasing the clamping to the armature tube (6).

2. Fastening clip according to claim 1, **characterised in that** each of the actuating tabs (66) is bent up from a side edge (71) of the clamping wing (55) and projects upwards from the top side (67) of the clamping wing (55) in the axial direction of the vertical axis (54).

3. Fastening clip according to claim 1 or 2, **characterised in that** each of the actuating tabs (66) has a plate-shaped actuating section (78), which is designed to apply the actuating force (69) and defines the actuating faces (68), and the plate plane of which is aligned at least substantially at right angles relative to a longitudinal axis (79) passing through the fold-over edge regions (63) of the base plate (51), wherein the plate-shaped actuating section (78) is expediently represented by a bent-over end section (85) of the associated actuating tab (66).

4. Fastening clip according to any of claims 1 to 3, **characterised in that** each of the actuating tabs (66) has a first tab section (80), which projects upwards from the top side (67) of the clamping wing (55) and from which projects, in the axial direction of a longitudinal axis (79) passing through the fold-over edge regions (63) of the base plate (51), a second tab section (81), which is adjoined by a sideways-angled end section (85), which forms an actuating section (78) defining the actuating face (68), wherein the first tab section (80) is expediently bent up from a lateral edge (71) of the clamping wing (55) and extends at least substantially parallel to a plane defined by a longitudinal axis (79) passing through the two fold-over edge regions (63) and by the vertical axis (54).

5. Fastening clip according to any of claims 1 to 4, **characterised in that** the actuating faces (68) of the actuating tabs (66) are arranged on opposite sides of a reference plane (58) extending at right angles to the longitudinal axis (79) passing through the two fold-over edge regions (63), wherein they face away from the reference plane (58) and wherein each actuating face (68) points in the same direction as the clamping edge (64) of that clamping wing (55) on which the actuating tab (66) having this actuating face (68) is located, the reference plane (58) expediently coinciding with the vertical axis (54).

6. Fastening clip according to any of claims 1 to 5, **characterised in that** the base plate (51) and the clamping wings (55) are domed, wherein the convex side of the base plate (51) faces the clamping wings (55) and the convex sides of the clamping wings (55) face away from the base plate (51), the domes of the base plate (51) and the clamping wings (55) expediently having the same radius of curvature.

7. Fastening clip according to any of claims 1 to 6, **characterised in that** each of the clamping edges (64) consist of clamping edge sections (83) arranged in a V-shape relative to one another and diverging towards the free end of the clamping wing (55) in such a way that the armature tube (6) is clamped in the position of use (33) of the fastening clip (5) by two clamping edge sections (83) each per clamping wing (55), and/or **in that** the fastening clip (5) is designed as a one-part stamped and bent component made of metal, and/or **in that** the fastening clip (5) can bear or bears against a bearing surface (82) of the solenoid coil element (4) fitted to the armature tube (6) with the two fold-over edge regions (63) of the base plate (51) in its position of use (33).

8. Fastening clip according to any of claims 1 to 7, **characterised in that** each of the clamping wings (55) has two actuating tabs (66), each of which is located at one of two opposite lateral edges (71) of the clamping wing (55) and each of which has a plate-shaped actuating section (78) defining one of the actuating faces (68), the plate-shaped actuating sections (78) of the actuating tabs (66) located on the same clamping wing (55) expediently lying in a common plane.

9. Fastening clip according to claim 8, **characterised in that** the plate-shaped actuating sections (78) are represented by sideways-bent end sections (85) of the actuating tabs (66), wherein the sideways-bent end sections (85) of the one clamping wing (55, 92) project towards each other and the sideways-bent end sections (85) of the other clamping wing (55, 91) project away from each other, the two actuating tabs (66) with the end sections (85) projecting towards each other being expediently located between the two actuating tabs (66) with the end sections (85) projecting away from each other.

10. Fastening clip according to any of claims 1 to 9, **characterised in that** each of the lateral edges (71) of the base plate (51), which extend between the fold-over edge regions (63), has a convex curvature towards the outside and expediently projects laterally beyond the clamping wings (55).

11. Fastening clip according to any of claims 1 to 10, **characterised in that** it has a longitudinal axis (79) passing through the two fold-over edge regions (63), wherein a first pair (93) of actuating tabs (66) spaced transversely to the longitudinal axis (79) projects from the top side (67) of the first clamping wing (91) in the axial direction of the longitudinal axis (79) beyond the other, second clamping wing (92), and wherein a second pair (94) of actuating tabs (66), likewise spaced transversely to the longitudinal axis (79), projects past the first pair (93) of actuating tabs (66) with lateral offset in such a way that the one pair (94) of actuating tabs (66) is flanked by the other pair (93) of actuating tabs (66) on its outside.

12. Fastening clip according to any of claims 1 to 10, **characterised in that** the one of the two clamping wings (91) is wider than the other clamping wing (92), wherein each of the actuating tabs (66) is bent up from a lateral edge (71) of the associated clamping wing (55, 91, 92) and wherein the actuating tabs (66) of the one clamping wing (91) are offset relative to the actuating tabs (66) of the other clamping wing (92) transversely to a longitudinal axis (79) passing through the two fold-over edge regions (63).

13. Valve with a base section (2), from which an armature tube (6) projects in which a solenoid armature (18) for actuating a valve member is slidably located, and with an electrically actuable solenoid coil unit (4) fitted to the armature tube (6) and secured by means of a fastening element applied to the armature tube (6), **characterised in that** the fastening element is a fastening clip (5) according to any of claims 1 to 12 pushed onto the armature tube (6).

14. Valve according to claim 13, **characterised in that** the solenoid coil unit (4) and the base section (2) are parts of a pilot valve device (17) actuating a main valve device (3), wherein the pilot valve device (17) and the main valve device (3) are combined to form an assembly representing the valve (1).

15. Valve according to claim 13 or 14, **characterised in that** the armature tube (6) is designed without grooves in the application region (49) of the clamping edges (64) of the fastening clip (5) located in the position of use.

## Revendications

1. Clip de fixation servant à fixer une unité bobine magnétique (4) emboîtée sur un tube d'ancrage (6) d'une soupape, avec une plaque de base (51) traversée par un trou de centrage (52), avec deux ailettes de serrage (91, 92) repliées au niveau de zones de bord de repliage (63) opposées les unes aux autres de la plaque de base (51) et dépassant d'un côté supérieur (56) de la plaque de base (51), qui disposent côté frontal au niveau de leurs extrémités libres tournées les unes vers les autres d'une arête de serrage (64), qui délimitent conjointement une ouverture de serrage (65) en affleurement avec le trou de centrage (52) dans la direction axiale d'un axe vertical (54), dans lequel les ailettes de serrage (91, 92) peuvent être cintrées de manière élastique comme un ressort par rapport à la plaque de base (51) en modifiant la section transversale de l'ouverture de serrage (65) et reposent, dans une position d'utilisation (33) emboîtée sur le tube d'ancrage (6), du clip de fixation (5), par leurs arêtes de serrage (64), sous une précontrainte par serrage au niveau de la périphérie extérieure du tube d'ancrage (6) traversant le trou de centrage (52) et l'ouverture de serrage (65), **caractérisé en ce qu'**est disposée au niveau de chaque ailette de serrage (91, 92), à l'écart de son arête de serrage (64), au moins une patte d'actionnement (66), qui fait saillie du côté supérieur (67), opposé à la plaque de base (51), de l'ailette de serrage (91, 92), dans lequel les pattes d'actionnement (66) présentent respectivement une surface d'actionnement (68), qui peut être soumise à l'action d'une force d'actionnement (69) pour écarter de manière élastique les ailettes de serrage (91, 92) dans le cadre d'un déplacement d'ouverture (70) afin d'agrandir la section transversale de l'ouverture de serrage (65) et de desserrer ainsi le serrage par rapport au tube d'ancrage (6).

2. Clip de fixation selon la revendication 1, **caractérisé en ce que** les pattes d'actionnement (66) sont cintrées de manière verticale respectivement depuis un bord latéral (71) de l'ailette de serrage (55) et dépassent vers le haut dans la direction axiale de l'axe vertical (54) du côté supérieur (67) de l'ailette de serrage (55).

3. Clip de fixation selon la revendication 1 ou 2, **caractérisé en ce que** les pattes d'actionnement (66) présentent respectivement une section d'actionnement (78) en forme de plaque réalisée pour être soumise à l'action de la force d'actionnement (69) et définissant les surfaces d'actionnement (68), dont le plan de plaque est orienté au moins sensiblement de manière orthogonale par rapport à un axe longitudinal (79) traversant les zones de bord de repliage (63) de la plaque de base (51) et orienté de manière orthogonale par rapport à l'axe vertical (54), dans lequel de manière appropriée la section d'actionnement (78) en forme de plaque est formée par une section d'extrémité (85) pliée de la patte d'actionnement (66) associée.

4. Clip de fixation selon l'une quelconque des revendications 1 à 3, **caractérisé en ce que** les pattes d'actionnement (66) présentent respectivement une première section de patte (80) dépassant de manière verticale du côté supérieur (67) de l'ailette de serrage (55), de laquelle dépasse en s'éloignant dans la direction axiale d'un axe longitudinal (79) traversant les zones de bord de repliage (63) de la plaque de base (51), une deuxième section de patte (81), à laquelle se raccorde une section d'extrémité (85) coudée latéralement, qui forme une section d'actionnement (78) en forme de plaque définissant la surface d'actionnement (68), dans lequel de manière appropriée la première section de patte (80) est pliée de manière verticale depuis un bord latéral (71) de l'ailette de serrage (55) et s'étend au moins sensiblement de manière parallèle par rapport à un plan, qui se déploie à travers un axe longitudinal (79) traversant les deux zones de bord de repliage (63) et l'axe vertical (54).

5. Clip de fixation selon l'une quelconque des revendications 1 à 4, **caractérisé en ce que** les surfaces d'actionnement (68) des pattes d'actionnement (66) sont disposées sur des côtés opposés les uns aux autres d'un plan de référence (58) s'étendant de manière orthogonale par rapport à un axe longitudinal (79) traversant les deux zones de bord de repliage (63), dans lequel elles sont opposées au plan de référence (58) et dans lequel chaque surface d'actionnement (68) pointe dans la même direction que l'arête de serrage (64) de l'ailette de serrage (55), au niveau de laquelle précisément la patte d'actionnement (66) présentant ladite surface d'actionnement (68) est disposée, dans lequel de manière appropriée le plan de référence (58) coïncide avec l'axe vertical (54).

6. Clip de fixation selon l'une quelconque des revendications 1 à 5, **caractérisé en ce que** la plaque de base (51) et l'ailette de serrage (55) sont bombées, dans lequel le côté convexe de la plaque de base (51) est tourné vers les ailettes de serrage (55) et les côtés convexes des ailettes de serrage (55) sont opposés à la plaque de base (51), et dans lequel de manière appropriée les bombements de la plaque de base (51) et des ailettes de serrage (55) présentent le même rayon d'incurvation.

7. Clip de fixation selon l'une quelconque des revendications 1 à 6, **caractérisé en ce que** les arêtes de serrage (64) sont constituées respectivement de deux sections d'arête de serrage (83) disposées en forme de V l'une par rapport à l'autre, divergeant en direction de l'extrémité libre de l'ailette de serrage (55) de telle manière que le tube d'ancrage (6) est serré dans la position d'utilisation (33) du clip de fixation (5) par respectivement deux sections d'arête de serrage (83) par ailette de serrage (55), et/ou que le clip de fixation (5) est réalisé sous la forme d'une pièce découpée et pliée (84) d'un seul tenant constituée de métal, et/ou que le clip de fixation (5) peut reposer ou repose au niveau d'une surface d'appui (82) de l'unité bobine magnétique (4) emboîtée sur le tube d'ancrage (6) dans sa position d'utilisation (33) par les deux zones de bord de repliage (63) de la plaque de base (51).

8. Clip de fixation selon l'une quelconque des revendications 1 à 7, **caractérisé en ce que** chaque ailette de serrage (55) dispose de deux pattes d'actionnement (66), qui sont disposées respectivement au niveau d'un de deux bords latéraux (71) opposés l'un à l'autre de l'ailette de serrage (55) et qui présentent respectivement une section d'actionnement (78) en forme de plaque définissant une des surfaces d'actionnement (68), dans lequel les sections d'actionnement (78) en forme de plaque des pattes d'actionnement (66) disposées au niveau de la même ailette de serrage (55) se situent de manière appropriée dans un plan commun.

9. Clip de fixation selon la revendication 8, **caractérisé en ce que** les sections d'actionnement (78) en forme de plaque sont formées par des sections d'extrémité (85) pliées latéralement des pattes d'actionnement (66), dans lequel les sections d'extrémité (85) pliées latéralement d'une ailette de serrage (55, 92) dépassent les unes par rapport aux autres et les sections d'extrémité (85), pliées latéralement, de l'autre ailette de serrage (55, 91) dépassent en s'éloignant les unes des autres, dans lequel de manière appropriée les deux pattes d'actionnement (66) présentant les sections d'extrémité (85) dépassant les unes par rapport aux autres sont disposées entre les deux pattes d'actionnement (66) présentant les sections d'extrémité (85) dépassant en s'éloignant les unes des autres.

10. Clip de fixation selon l'une quelconque des revendications 1 à 9, **caractérisé en ce que** les bords latéraux (71), s'étendant entre les zones de bord de repliage (63), de la plaque de base (51) sont bombés respectivement de manière convexe vers l'extérieur et dépassent de manière appropriée de manière latérale au-delà des ailettes de serrage (55).

11. Clip de fixation selon l'une quelconque des revendications 1 à 10, **caractérisé en ce qu'**il présente un axe longitudinal (79) traversant les deux zones de bord de repliage (63), dans lequel une première paire (93) de pattes d'actionnement (66) espacées l'une par rapport à l'autre de manière transversale par rapport à l'axe longitudinal (79) dépasse dans la direction axiale de l'axe longitudinal (79) au-delà de l'autre deuxième ailette de serrage (92) du côté supérieur (67) d'une première ailette de serrage (91) et dans lequel une deuxième paire (94) de pattes d'actionnement (66) espacées également de manière transversale par rapport à l'axe longitudinal (79) dépasse dans une direction opposée à celle de la première paire (93) de pattes d'actionnement (66) avec un décalage latéral le long de la première paire (93) de pattes d'actionnement (66) du côté supérieur (67) de la deuxième ailette de serrage (92) de telle manière qu'une paire (94) de pattes d'actionnement (66) est flanquée au niveau de son côté extérieur par l'autre paire (93) de pattes d'actionnement (66).

12. Clip de fixation selon l'une quelconque des revendications 1 à 11, **caractérisé en ce que** l'une (91) des deux ailettes de serrage est plus large que l'autre ailette de serrage (92), dans lequel les pattes d'actionnement (66) sont pliées de manière verticale respectivement depuis un bord latéral (71) de l'ailette de serrage (55, 91, 92) associée et dans lequel les pattes d'actionnement (66) d'une ailette de serrage (91) sont disposées de manière décalée par rapport aux pattes d'actionnement (66) de l'autre ailette de serrage (92) de manière transversale par rapport à un axe longitudinal (79) traversant les deux zones de bord de repliage (63).

13. Soupape avec une section de socle (2), de laquelle dépasse en s'éloignant un tube d'ancrage (6), dans lequel est disposé de manière à pouvoir coulisser un induit magnétique (18) servant à l'actionnement d'un organe de soupape, et avec une unité bobine magnétique (4) pouvant être actionnée de manière électrique, qui est emboîtée sur le tube d'ancrage (6) et est bloquée au moyen d'un élément de fixation installé sur le tube d'ancrage (6), **caractérisée en ce que** l'élément de fixation est un clip de fixation (5) emboîté sur le tube d'ancrage (6) selon l'une quelconque des revendications 1 à 12.

14. Soupape selon la revendication 13, **caractérisée en ce que** l'unité bobine magnétique (4) et la section de socle (2) font partie intégrante d'un dispositif de soupape pilote (17) actionnant un dispositif de soupape principale (3), dans laquelle le dispositif de soupape pilote (17) et le dispositif de soupape principale (3) sont réunis en un module formant la soupape (1).

15. Soupape selon l'une quelconque des revendications 13 ou 14, **caractérisée en ce que** le tube d'ancrage (6) est réalisé sans rainure dans la zone d'engagement (49) des arêtes de serrage (64) du clip de fixation (5) disposé dans la position d'utilisation (33).
